# EUROPEAN PATENT APPLICATION

(11) **EP 4 152 815 A1**
(43) Date of publication of application: **22.03.2023**
(21) Application number: 21818654.2
(22) Date of filing: 20.05.2021
(51) Int. Cl.: H04W 28/24

(54) **COMMUNICATION METHOD AND COMMUNICATION DEVICE**

(30) Priority: 04.06.2020 CN 202010500734
(71) Applicant: Huawei Technologies Co., Ltd., Shenzhen, Guangdong 518129 (CN)
(72) Inventor: PENG, Wenjie, Shenzhen, Guangdong 518129 (CN)
(74) Representative: Epping - Hermann - Fischer
(86) International application number: PCT/CN2021/094882
(87) International publication number: WO 2021/244299

(57) **Abstract**

Embodiments of this application provide a communication method and a communication apparatus. The method includes: mapping a plurality of quality of service profiles for a quality of service flow, and obtaining at least one of the plurality of quality of service profiles. In embodiments of this application, the apparatus itself determines to transmit the quality of service flow, so that flexible configuration of network communication is improved.

## Description

This application claims priority to Chinese Patent Application No. 202010500734.1, filed with the China National Intellectual Property Administration on June 4, 2020 and entitled "COMMUNICATION METHOD AND COMMUNICATION DEVICE", which is incorporated herein by reference in its entirety.

### TECHNICAL FIELD

This application relates to the field of wireless communication technologies, and in particular, to a communication method and a communication device.

### BACKGROUND

With development of wireless communication technologies, a future-oriented communication system is derived, for example, a 5th generation mobile communication (the 5th Generation mobile communication, 5G) system or a new radio (new radio, NR) system. In the foregoing communication system, terminals may directly communicate with each other through a sidelink (sidelink). A typical application scenario of sidelink communication is vehicle-to-everything (vehicle to X, V2X). In the vehicle-to-everything, each vehicle may be understood as a terminal, and data transmission between terminals is directly performed through the sidelink, to effectively reduce a communication delay.

In a conventional technology, service data transmission between a network device and a terminal is directly configured by a core network device, and is implemented by using an evolved packet system (evolved packet system, EPS) bearer. How to implement data transmission between terminals based on a new communication system is a problem to be urgently resolved in the industry.

### SUMMARY

This application describes a communication method and a communication device, to implement data transmission between terminals.

According to a first aspect, a communication method between terminals is provided. The method includes: A communication device maps a plurality of quality of service profiles for a quality of service flow; and the communication device sends at least one of the plurality of quality of service profiles to a network device. Based on this communication manner, flexible configuration of communication between terminals can be implemented, to improve a system adaptation possibility.

In a possible implementation, that the communication device sends at least one of the plurality of quality of service profiles to a network device includes: The communication device sends the plurality of quality of service profiles, an identifier of the quality of service flow, and a destination identifier to the network device. Therefore, the network device may independently obtain an appropriate quality of service profile for communication between terminals.

In a possible implementation, the method further includes: The communication device receives indication information from the network device, to indicate one of the plurality of quality of service profiles. Therefore, design complexity of the communication device can be reduced.

In a possible implementation, the method further includes: The communication device receives sidelink configuration information sent by the network device; and the communication device selects one of the plurality of quality of service profiles based on the sidelink configuration information. Therefore, the communication device may independently obtain an appropriate quality of service profile for communication between terminals.

In a possible implementation, that the communication device sends at least one of the plurality of quality of service profiles to a network device includes: The communication device sends the selected quality of service profile to the network device. Therefore, design complexity of the network device can be reduced.

In a possible implementation, the sidelink configuration information includes at least one or more of a channel busy ratio, a reference signal received power, reference signal received quality, and channel state information. Based on the sidelink configuration information, the communication device can further improve flexible configuration reliability and implement communication between terminals.

In a possible implementation, the method further includes: The communication device obtains a mapping rule of quality of service. That a communication device maps a plurality of quality of service profiles for a quality of service flow specifically includes: The communication device maps the plurality of quality of service flow profiles for the quality of service flow based on the mapping rule. Therefore, flexible configuration of the communication device can be improved, and system adaptation can be increased.

In a possible implementation, QoS flow information further includes at least one of the following: a QoS flow identifier, a QoS flow parameter, a packet data unit session identifier PDU session ID corresponding to a QoS flow, and slicing slicing information.

In a possible implementation, the communication device is a terminal, and the network device is a base station, or the network device apparatus is a central unit CU.

In a possible implementation, the QoS flow is uplink data or downlink data having a same QoS parameter. According to a second aspect, a communication method between terminals is provided. The method includes: A network device obtains at least one quality of service profile based on a plurality of quality of service profiles, where the plurality of quality of service profiles correspond to a quality of service flow.

In a possible implementation, the method further includes: The network device receives the plurality of quality of service profiles, an identifier of the quality of service flow, and a destination identifier from a communication device. In a possible implementation, the method further includes: The network device sends indication information to the communication device, to indicate one quality of service profile obtained based on the plurality of quality of service profiles.

In a possible implementation, the method further includes: The network device sends sidelink configuration information to the communication device.

In a possible implementation, that a network device obtains at least one quality of service profile based on a plurality of quality of service profiles specifically includes: The network device receives one quality of service profile that is selected based on the sidelink configuration information from the plurality of quality of service profiles and that is sent by the communication device.

In a possible implementation, the sidelink configuration information includes at least one or more of a channel busy ratio, a reference signal received power, reference signal received quality, and channel state information.

In a possible implementation, the communication device is a terminal, and the network device is a base station, or the network device is a central unit CU or a distributed unit DU.

In a possible implementation, a QoS flow is uplink data or downlink data having a same QoS parameter.

According to a third aspect, an apparatus used for sidelink communication is provided. The apparatus may be configured to perform operations performed by the communication device in any one of the first aspect or the possible implementations of the first aspect. Specifically, the apparatus may include modules and units configured to perform the operations performed by the communication device in any one of the possible implementations of the first aspect. According to a fourth aspect, an apparatus used for sidelink communication is provided. The apparatus may be configured to perform operations performed by the network device in any one of the second aspect or the possible implementations of the second aspect. Specifically, the apparatus may include modules and units configured to perform the operations performed by the network device in any one of the possible implementations of the second aspect.

According to a fifth aspect, a terminal device is provided. The terminal device includes a processor, a transceiver, and a memory. The processor, the transceiver, and the memory communicate with each other through an internal connection path. The memory is configured to store instructions, and the processor is configured to execute the instructions stored in the memory. When the processor executes the instructions stored in the memory, the execution enables the terminal device to perform the method according to any one of the possible implementations of the first aspect, or the execution enables the terminal device to implement the apparatus provided in the third aspect. According to a sixth aspect, a network device is provided. The network device includes a processor, a transceiver, and a memory. The processor, the transceiver, and the memory communicate with each other through an internal connection path. The memory is configured to store instructions, and the processor is configured to execute the instructions stored in the memory. When the processor executes the instructions stored in the memory, the execution enables the network device to perform the method according to any one of the possible implementations of the second aspect, or the execution enables the network device to implement the apparatus provided in the fourth aspect. According to a seventh aspect, a chip system is provided, including a memory and a processor. The memory is configured to store a computer program, and the processor is configured to invoke the computer program from the memory and run the computer program, so that a communication device onto which the chip system is installed performs the method according to any one of the first aspect, the second aspect, or the possible implementations thereof.

According to an eighth aspect, a computer program product is provided. The computer program product includes computer program code. When the computer program code is run by a communication unit, a processing unit or a transceiver, and a processor of a communication device (for example, a network device or a terminal device), the communication device is enabled to perform the method according to any one of the first aspect, the second aspect, or the possible implementations thereof.

According to a ninth aspect, a computer-readable storage medium is provided. The computer-readable storage medium stores a program. The program enables a device (for example, a network device or a communication device) to perform the method according to any one of the first aspect, the second aspect, or the possible implementations thereof.

According to a tenth aspect, a computer program is provided. When the computer program is executed on a computer, the computer is enabled to implement the method according to any one of the first aspect, the second aspect, and the possible implementations thereof.

### BRIEF DESCRIPTION OF DRAWINGS

FIG. 1a is a schematic diagram of a communication system according to an embodiment of this application;
FIG. 1b is a schematic diagram of a communication system according to an embodiment of this application;
FIG. 1c is a schematic diagram of a communication system according to an embodiment of this application;
FIG. 2a is a schematic diagram of a communication system according to an embodiment of this application;
FIG. 2b is a schematic diagram of a communication system according to an embodiment of this application;
FIG. 3 is a schematic flowchart of a communication method according to an embodiment of this application;
FIG. 4 is a schematic diagram of a structure of a communication apparatus according to an embodiment of this application;
FIG. 5 is a schematic diagram of a structure of a communication device according to an embodiment of this application; and
FIG. 6 is a schematic diagram of a structure of a network device according to an embodiment of this application.

### DESCRIPTION OF EMBODIMENTS

The following clearly and completely describes the technical solutions in embodiments of the present invention with reference to the accompanying drawings in embodiments of the present invention.

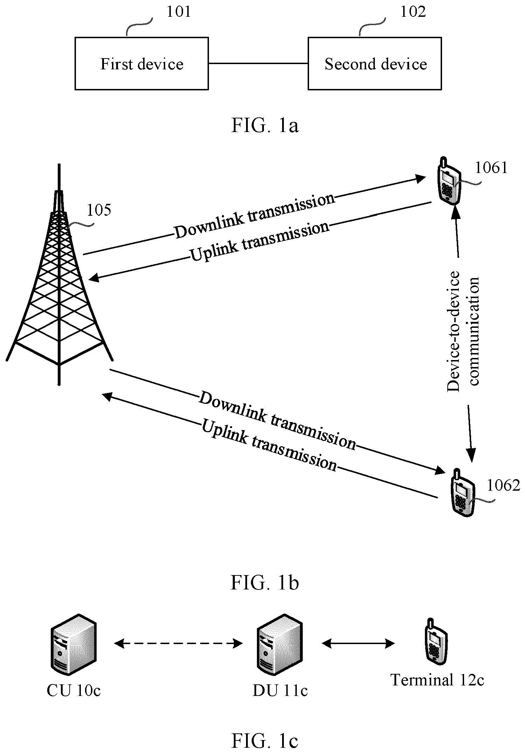

To solve a problem in the conventional technology that data transmission between terminals cannot be performed for different communication systems, embodiments of the present invention provide a technical solution based on a communication system shown in FIG. 1a, to improve efficiency of data transmission in a system.

FIG. 1a is a schematic diagram of a possible system architecture to which embodiments of this application are applicable. The system architecture shown in FIG. 1a includes a first device 101 and a second device 102. The second device in this embodiment of this application may be connected to the first device in a wireless manner, that is, the second device may communicate with the first device through a wireless network. It should be understood that FIG. 1a is merely a schematic architectural diagram of the communication system. A quantity of first devices and a quantity of second devices in the communication system are not limited in this embodiment of this application.

In an example, the first device and the second device in the foregoing system architecture may perform sidelink communication. FIG. 1b is a schematic diagram of a sidelink communication scenario. As shown in FIG. 1b, the communication scenario may include a network device 105 and one or more terminal devices (for example, a terminal device 1061 and a terminal device 1062). Data may be transmitted between the network device 105 and each of the terminal device 1061 and the terminal device 1062 by using an air interface resource, and data may be transmitted between the terminal device 1061 and the terminal device 1062 by using a sidelink resource. The first device may be the terminal device 1061, and the second device may be the terminal device 1062, or vice versa. In FIG. 1b, uplink transmission is used as an example. A data channel for performing uplink data transmission between the network device 105 and the terminal device (the terminal device 1061 or the terminal device 1062) may be carried on an uplink (uplink, UL) carrier (for example, a first UL carrier). A data channel for performing data transmission between the terminal device 1061 and the terminal device 1062 may be carried on an SL carrier. In an example, the SL carrier may be a UL carrier (for example, a second UL carrier). The first UL carrier and the second UL carrier may be a same carrier.

Sidelink (sidelink, SL) communication is a technology that allows terminal devices to communicate with each other, and a resource used to carry communication of the terminal devices may be referred to as a sidelink resource. Because the sidelink communication can implement direct communication between different terminal devices, a high data rate, a low latency, and low power consumption can be implemented. The sidelink communication may include, for example, vehicle-to-vehicle (vehicle-to-vehicle), vehicle-to-infrastructure (vehicle-to-infrastructure), and vehicle-to-pedestrian (vehicle-to-pedestrian) communication. It may be understood that the sidelink communication technology may be used in both an industrial Internet communication scenario and a wireless mesh network communication scenario.

As shown in FIG. 1c, the communication system includes at least a central unit (centralized unit, CU) 10c and a distributed unit (distributed, DU) 11c. The DU 11c communicates with a terminal 12c. For example, a part of functions of an NR base station are deployed on the CU, and remaining functions are deployed on the DU. In this case, there may be one or more DUs, and a plurality of DUs may share one CU, to reduce costs and facilitate network expansion. Specifically, CU-DU division may be performed by protocol stacks. A possible manner is to deploy at least one of the following protocol layers on the CU: a radio resource control (Radio Resource Control, RRC) layer, a service data adaptation protocol (service data adaptation protocol, SDAP) layer, and a packet data convergence protocol (Packet Data Convergence Protocol, PDCP) layer. At least one of the following remaining protocol layers is deployed on the DU: a radio link control (Radio Link Control, RLC) layer, a media access control (Media Access Control, MAC) layer, or a physical layer. The CU and the DU may be connected through an F1 interface. The CU represents the NR base station to connect to an NR core network. A person skilled in the art may understand that the CU and the DU may be located on different physical entities or be independent of the NR base station. In other words, the CU and the DU may be combined to implement functions of the NR base station or replace the NR base station.

The system architecture and the service scenario described in embodiments of the present invention are intended to describe the technical solutions in embodiments of the present invention more clearly, and do not constitute a limitation on the technical solutions provided in embodiments of the present invention. A person of ordinary skill in the art may know that: With the evolution of the network architecture and the emergence of new service scenarios, the technical solutions provided in embodiments of the present invention are also applicable to similar technical problems.

The technical solutions in embodiments of this application may be applied to various communication systems, for example, a global system for mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system. The technical solutions in embodiments of this application may be further applied to device-to-device (device-to-device, D2D) communication, machine-to-machine (machine-to-machine, M2M) communication, machine type communication (machine type communication, MTC), and communication in an internet of vehicles system. Communication modes in the internet of vehicles system are collectively referred to as V2X (where X represents everything). For example, the V2X communication includes vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

It should be understood that the network device in the foregoing communication system may be any device having a wireless transceiver function or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a donor eNB (donor eNB, DeNB), a baseband unit (baseband unit, BBU), and an access point (access point, AP), a wireless relay node, a wireless backhaul node, a transmission point (transmission point, TP), a transmission reception point (transmission and reception point, TRP), and the like in a wireless fidelity (wireless fidelity, Wi-Fi) system. The device may alternatively be a gNB or a transmission point (TRP or TP) in a 5G, such as NR, system, one antenna panel or a group (including a plurality of antenna panels) of antenna panels of a base station in a 5G system, a network node that constitutes a gNB or a transmission point, for example, a baseband unit (BBU) or a distributed unit (distributed unit, DU), or the like.

In some deployments, a gNB may include a central unit (centralized unit, CU) and a DU. The gNB may further include a radio frequency unit (radio unit, RU). The CU implements a part of functions of the gNB, and the DU implements a part of the functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

It should be further understood that a terminal device in the foregoing communication system may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the foregoing terminal device and a chip that may be disposed in the foregoing terminal device are collectively referred to as a terminal device. For ease of understanding for this application, before the communication method provided in this application is described, concepts in this application are first briefly described.

For ease of understanding, related terms and related technologies in embodiments of this application are first briefly described.

### Bandwidth part

In NR, a carrier of a base station has a wider bandwidth than an LTE carrier. For example, a bandwidth of an NR carrier may be 100 M. Different terminals have different radio frequency capabilities, and can support different maximum bandwidths. Therefore, a concept of a bandwidth part (bandwidth part, BWP) is introduced. A BWP is a group of consecutive RB resources on a carrier. Different BWPs may occupy frequency domain resources that partially overlap but have different bandwidths, or may be bandwidth resources that have different numerologies but may not overlap with each other in frequency domain.

In embodiments of this application, for brief description, a DL BWP represents a downlink BWP, and a UL BWP represents an uplink BWP.

When a cell includes a plurality of active bandwidth parts, a plurality of configured BWPs in the cell may be grouped. The plurality of active bandwidth parts may be located on a same carrier or different carriers of the cell. In other words, a cell can include a plurality of downlink carriers or a carrier includes a plurality of active DL BWPs. In this case, the plurality of configured BWPs in the cell may be grouped. Generally, when a base station performs BWP grouping, bandwidth positions of different BWPs and a relationship between BWPs that are expected to support a data retransmission requirement between the BWPs may be considered to perform the BWP grouping. In addition, when the base station performs the BWP grouping, some special resource use situations may be considered.

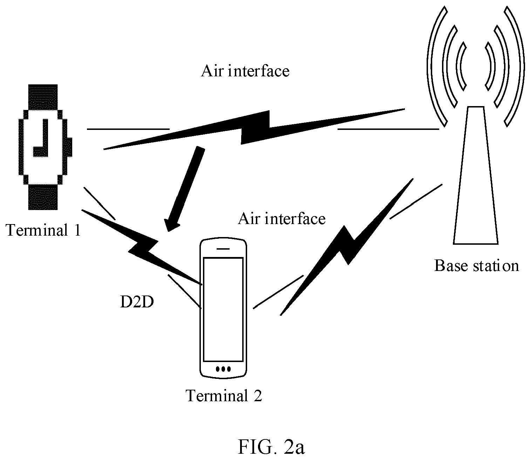

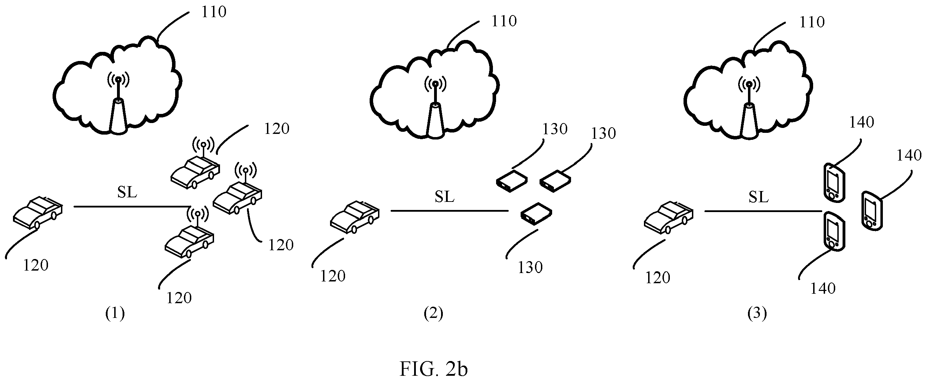

In a possible manner, as shown in FIG. 2a and FIG. 2b, BWPs used for data sending and receiving on a sidelink (sidelink, SL) in D2D communication or V2X communication are grouped into a separate group. The separate group may be one or more separate groups. The SL refers to a D2D link shown in FIG. 2a and an SL link shown in FIG. 2b. On the SL, data transmitted between terminal devices may not be forwarded by a network device. In other words, the SL may be a transmission link between the terminal devices.

As shown in FIG. 2b, a vehicle may obtain road condition information or receive an information service in time through V2V, V2I, V2P, or V2N communication. These communication modes may be collectively referred to as V2X communication. In FIG. 2b, (1), (2), and (3) are respectively schematic diagrams of V2V, V2I, and V2P communication. 110 is a network device. For example, the network device may be an E-UTRAN. 120 may represent a vehicle, 130 may represent a roadside infrastructure, and 140 may represent a pedestrian. The most common V2V communication and V2I communication are used as an example. As shown in (1) in FIG. 2b, a vehicle may broadcast, to a surrounding vehicle through the V2V communication, information about the vehicle such as a vehicle speed, a driving direction, a specific position, and whether an emergency brake is stepped on, and a driver of the surrounding vehicle can obtain the information, to better perceive a traffic condition outside a line of sight, so as to predict a dangerous condition in advance and avoid the dangerous condition. For the V2I communication shown in (2) in FIG. 2b, in addition to the foregoing exchange of security information, a roadside infrastructure, for example, a road side unit (road side unit, RSU), may provide various types of service information and data network access for a vehicle, and functions such as electronic toll collection and in-vehicle infotainment greatly improve traffic intelligence.

### Resource unit and frequency domain unit

The resource unit may be used as measurement unit of a resource occupied in time domain, frequency domain, or time-frequency domain. In embodiments of this application, the resource unit may include, for example, at least one of a symbol, a resource element (resource element, RE), a resource block (resource block, RB), or a subcarrier. This is not limited in this application. In embodiments of this application, the resource unit may be used as a measurement unit of a resource occupied in frequency domain. Therefore, the descriptions of the resource unit in embodiments of this application may be understood as a resource unit in frequency domain. In addition, for ease of description, the resource unit in frequency domain may be referred to as a frequency domain unit.

### BWP configuration

For the BWP configuration, a network device may configure a starting frequency domain unit of a BWP, a bandwidth size of the BWP, and a frame structure parameter (numerology) for a terminal device, so that the terminal device determines the BWP. The starting frequency domain unit of the BWP is a frequency domain unit at a highest or lowest frequency domain position in the BWP, and the bandwidth size may be represented as a quantity of frequency domain units included in the BWP.

### Quality of service (quality of service, QoS) flow

The QoS flow includes data flows or data packets that have a same or similar QoS parameter, for example, may include an internet protocol (internet protocol, IP) packet or an ethernet frame (Ethernet frame). Based on communication between terminals, the QoS flow may be understood as uplink data and/or downlink data having a same QoS parameter. For example, a core network device maps a packet or an IP flow to a QoS flow, and an IP packet or an IP flow in the QoS flow may have a same or similar QoS parameter. A QoS parameter may be used to reduce a data transmission delay and decrease an error rate. A PDU session may be a connection between a terminal and a communication network, to provide a packet data unit connection service.

Communication in a sidelink NR network may be distinguished based on service flows. For example, an IP flow and an ethernet flow may be understood as corresponding to different services. The foregoing service flows are identified as different QoS flows based on different QoS parameters or features. Specifically, a base station maps the QoS flows to a sidelink data radio bearer (data radio bearer, DRB), or defines a mapping relationship between the QoS flows and a sidelink DRB. For example, the base station maps different QoS flows to different sidelink DRBs or maps QoS flows with similar parameters to a same sidelink DRB. A terminal establishes a sidelink DRB based on the mapping relationship, and sends a corresponding QoS flow to another terminal by using the sidelink DRB. The sidelink DRB is a DRB used to transmit data between terminals. The following describes a QoS flow adaptation mechanism of a direct interface (PC5) between terminals. QoS flow configuration in embodiments of the present invention is mainly for a sidelink communication manner. Details are not described below again.

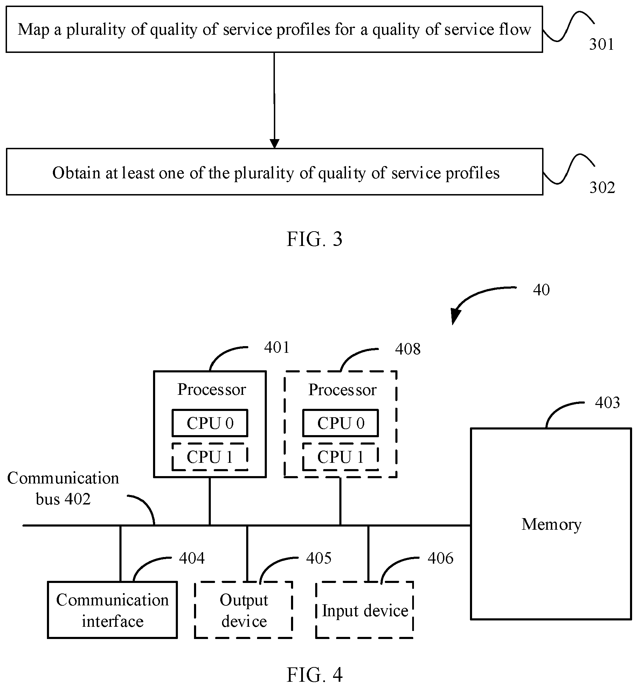

To quickly adapt to an optimal QoS profile (QoS profile) for a QoS flow that can be guaranteed by the base station, an alternative QoS (alternative QoS) mechanism is introduced. In one manner, a QoS flow is established between a core network and the base station for UE, and a plurality of QoS profiles are provided for the base station. Further, the base station may select, from the plurality of sets of QoS profiles based on a network status of the base station, an optimal QoS profile that can meet a current network status, and indicate the optimal QoS profile to the core network. In embodiments of the present invention, a terminal derives a plurality of sets of QoS profiles for a QoS flow on a sidelink, and then a base station or the terminal may determine a set of QoS profile based on the QoS flow on the sidelink and use the set of QoS profile for communication between terminals, thereby improving flexible configuration of sidelink communication in a network. For example, the terminal or the base station may determine content, parameters, and a combination of the finally selected QoS profile based on the plurality of sets of QoS profiles, or determine a mapping relationship between a QoS flow and a QoS profile. The following provides detailed descriptions. FIG. 3 is a schematic flowchart of a communication method according to an embodiment of this application. In a regular sidelink scenario, description is performed with a communication device being a terminal and a network device being a base station. In a CU-DU scenario, description is performed with a network device being a CU and a DU separately. The communication device, the network device, the CU, and the DU may all be chips, or may be implemented by chips. This is not limited in this embodiment of this application.

The method includes the following steps.

One quality of service profile is obtained based on a plurality of quality of service profiles (QoS profiles). The plurality of quality of service profiles correspond to one quality of service (QoS) flow.

In this embodiment of the present invention, the foregoing obtaining action may be performed by the communication device or the network device. For example, the terminal is used as an example. The terminal may map a plurality of QoS profiles for one QoS flow and determine, by itself, an appropriate QoS profile for sidelink communication of the terminal. Alternatively, the base station is used as an example. The base station may determine, by itself based on a plurality of QoS profiles received from the terminal, an appropriate QoS profile for sidelink communication of the terminal.

Optionally, the foregoing method may be embodied by using the following steps.
301. Map a plurality of quality of service profiles for a quality of service flow.
302. Obtain at least one of the plurality of quality of service profiles.

It may be understood that an action of 301 may be performed by the communication device, and an action of 302 may be performed by the communication device or the network device. Specifically, UE may map one QoS flow to a plurality of QoS profiles. Then, the UE selects, by itself, an appropriate QoS profile based on the plurality of QoS profiles. Alternatively, the UE sends the plurality of QoS profiles to the base station, so that the base station selects an appropriate QoS profile from the plurality of QoS profiles.

Specifically, the UE may receive a QoS mapping rule from a core network element. A difference from a QoS mapping rule in a conventional technology lies in that, in this embodiment, the UE may map a plurality of sets of QoS profiles for a single QoS flow according to the QoS mapping rule provided by the core network element. Optionally, the mapping rule may be applicable to a QoS flow with a guaranteed bit rate (Guaranteed Flow Bit Rate, GBR).

A sidelink communication system is similar to a wireless communication system, and may also support broadcast, unicast, and multicast transmission manners. Broadcast is similar to broadcasting system information by a base station to a terminal. For example, the base station sends broadcast service data to UE without encryption, and any other UE in an effective receiving range may receive the broadcast service data if interested in the broadcast service. Unicast is similar to data communication performed after a radio resource control (radio resource control, RRC) connection is established between UE and a base station, and a unicast connection needs to be first established between two UEs.

After the unicast connection is established, the two UEs may perform data communication based on a negotiated identifier, where data may or may not be encrypted. Compared with broadcast communication, the unicast communication can be performed only between the two UEs that have established the unicast connection. Multicast communication is communication between all UEs in a communication group, and any UE in the group can receive and send multicast service data.

In this embodiment, when the UE is in a connected state, the foregoing mapping rule may be obtained from the core network element in the unicast manner; and when the UE is in an idle state or an inactive state, the foregoing mapping rule may be obtained in the broadcast manner. Optionally, the foregoing rule may be predefined in a protocol, or may be configured by the network device for the terminal device through broadcast or signaling. This is not limited herein. A person skilled in the art may understand that "predefined" means that the mapping rule is pre-configured on the terminal or pre-configured on a subscriber identity module (subscriber identity module, SIM) card of the terminal. In this embodiment of this application, the base station may send, to the terminal in a plurality of manners, the mapping rule determined by a core network. In an example, the base station may send the mapping rule to the terminal through semi-static signaling (where this may be understood as a semi-static manner). For example, the semi-static signaling may be radio resource control (radio resource control, RRC) signaling, a broadcast message, a system message, a media access control (media access control, MAC) control element (control element, CE), or the like. In another example, the base station may send the mapping rule to the first device after completing initialization (where this may be understood as a static manner).

A QoS flow may be uplink data or downlink data having a same QoS parameter. In this embodiment, a QoS flow may be identified by using a QoS flow identifier, or a QoS flow may be identified by using a QoS flow identifier and a destination identifier (destination ID) of the QoS flow. QoS flow information corresponding to the QoS flow may include at least one or any combination of the following: the QoS flow identifier, a QoS profile (QoS profile) of the QoS flow, the destination identifier (destination ID) of the QoS flow, or slicing (slicing) information. For example, the communication device sends a QoS flow identifier to the network device, so that the network device determines a QoS flow corresponding to the QoS flow identifier.

For service data mapped to a same QoS flow, the QoS profile (QoS profile) may be used by the base station or the terminal to perform same or similar processing on the service data, for example, a scheduling policy, a queue management policy, a rate adjustment policy, and RLC configuration. The QoS profile may include at least one or any combination of the following: QoS indication, an allocation and reservation priority, a resource type, a priority level, a packet delay budget, a packet error rate, an averaging window, a downlink maximum flow bit rate, an uplink maximum flow bit rate, a downlink guaranteed bit rate, an uplink guaranteed bit rate, notification control, a transmit QoS attribute, a maximum packet loss rate, a communication range, and a maximum data burst volume. For example, the QoS indication may be a 5G quality of service flow identifier (5G QoS ID, 5QI) of a sidelink interface (PC5), or may be understood as a value set of a set of QoS parameters.

In this embodiment, the PC5 5QI needs to be classified into a dynamic 5QI and a non-dynamic 5QI. Specifically, the dynamic 5QI includes one or more of the following parameters: the priority level, the packet delay budget, the packet error rate, delay critical (delay critical) or not, the averaging window, and the maximum data burst volume (maximum data burst volume). The non-dynamic 5QI includes one or more of the following parameters: the priority level, the averaging window, and the maximum data burst volume (maximum data burst volume).

Compared with that in the conventional technology, a core network device directly performs mapping between a QoS flow and a QoS profile, the technical solutions of this embodiment of the present invention can increase a degree of determining freedom of the base station or the terminal and improve configuration flexibility of the base station or the terminal.

For the CU-DU scenario, through signaling exchange between the CU and the DU, the CU performs unified management by selecting an optimal QoS profile from a plurality of QoS profiles mapped for a QoS flow.

In this embodiment, the UE maps a plurality of sets of QoS profiles for one QoS flow, and based on a current live network status, the UE or the base station determines an optimal QoS profile based on the plurality of sets of QoS profiles. In addition, when a current link status of the base station cannot ensure a service QoS requirement of the UE, the UE or the base station may perform adaptive adjustment, to improve service experience.

The following describes in detail the regular sidelink scenario and the sidelink CU-DU scenario.

### 1. Implementation 1 in the regular sidelink scenario

In this scenario, the method further includes: The communication device sends the plurality of quality of service profiles and the corresponding quality of service flow identifier to the network device. Specifically, the UE may report the QoS flow identifier, the plurality of sets of QoS profiles mapped from the QoS flow and the corresponding destination identifier (destination ID, DST ID) to the base station by using sidelink UE information (Sidelink UE Information, SUI). The SUI is used to request to perform resource configuration.

In this embodiment, the destination identifier may be obtained in the following plurality of ways.
1. For broadcast transmission, the destination identifier is related to a service. For example, different destination identifiers may correspond to different broadcast services. A person skilled in the art may understand that the destination identifier is obtained in a default manner, for example, the destination identifier is predefined or preconfigured.
2. For multicast transmission, the destination identifier is related to a communication group, and may be obtained by a PC5-S layer of the UE. For example, an upper layer of the UE is a PC5-S layer that is used for communication between terminals. A layer 2 of the UE may be an AS layer that is used for communication between the terminal and the base station. The upper layer of the UE may be understood as a non-access stratum (Non-access stratum, NAS), or may be referred to as a V2X layer or the PC5-S layer. In this embodiment of the present invention, the upper layer of the UE is described by using the PC5-S layer as an example. Details are not described below again.
3. For unicast transmission, the destination identifier is allocated by a peer UE.

In embodiments of this solution, a QoS flow identifier exchanged between the UE and the base station is applicable to the UE, in other words, communication is performed at a granularity of the UE. A QoS flow identifier exchanged between the AS layer and the PC5-S layer of the UE is applicable to a destination identifier, in other words, communication is performed at a granularity of the destination identifier. Details are not described below again. It may be understood that for a same QoS flow, a QoS flow identifier used during interaction between the UE and the base station may be different from a QoS flow identifier used during interaction between the upper layer of the UE and the AS.

Optionally, the communication device receives indication information from the network device, to indicate one of the plurality of quality of service profiles. Specifically, after receiving the plurality of sets of QoS profiles that are of the QoS flow and that are reported by the UE, the base station selects one set of QoS profile from the plurality of sets of QoS profiles, and notifies the UE of the set of QoS profile. For example, the base station may select one set of QoS profile from the plurality of sets of QoS profiles based on a currently detected sidelink communication status. Optionally, the base station selects a set of QoS profile that can meet a highest QoS requirement in the current sidelink communication status. Specifically, the indication information sent by the base station to the UE may be an index or an identifier, or may be complete information of a selected QoS profile. In addition, if the base station determines that the plurality of sets of QoS profiles reported by the UE do not conform to a current network communication status, the base station may construct a set of QoS profile independently of the QoS profiles reported by the UE. The QoS profile is different from any one of the plurality of sets of QoS profiles reported by the UE. Further, the indication information sent by the base station to the UE further includes a QoS flow identifier. To be specific, the base station indicates, to the UE, the QoS flow identifier and a selected QoS profile corresponding to the QoS flow identifier.

Further, the base station may further send a sidelink configuration to the terminal, including at least one of the following: a correspondence between a sidelink QoS flow and a sidelink bearer, a sidelink bearer configuration, a sidelink resource configuration, and a physical layer transmission configuration. It may be understood that the sidelink configuration is determined based on the selected set of QoS profile.

The sidelink resource configuration may include a frequency domain resource configuration and/or a time domain resource configuration. A frequency domain resource may be understood as a band (band) or a frequency band. In an example, the frequency domain resource may be a component carrier (component carrier, CC), a bandwidth part (bandwidth part, BWP), a carrier frequency band (carrier band), or the like. This is not limited in this embodiment of this application. The BWP may be a consecutive frequency domain resource, or may be an inconsecutive frequency domain resource. A time domain resource may include a time domain unit. The time-domain unit is a unit of a resource that is used for data transmission and that is in time domain, for example, may be a slot or a symbol. When a normal cyclic prefix (cyclic prefix, CP) is used, one slot may include 14 orthogonal frequency division multiplexing (orthogonal frequency division multiplex, OFDM) symbols. In this embodiment of this application, that one slot includes 14 symbols is merely used as an example for description. In another case, one slot may alternatively include another quantity of symbols. This is not specifically limited.

The physical layer transmission configuration may include a sidelink control channel (PSCCH, Physical Sidelink Control CHannel) and a sidelink data channel (PSSCH, Physical Sidelink Shared CHannel). In this application, a PSCCH resource may be a quantity of PRBs used for one time of PSCCH transmission, and a same PSCCH may be sent for one or more times. If the same PSCCH is sent for a plurality of times, resources occupied by a plurality of times of PSCCH sending may be independent of each other, or resources occupied by a plurality of times of PSCCH transmission are determined by a predefined or preconfigured resource pattern. Each resource pattern is associated with a unique index value. The UE determines a subset of a resource pool by receiving signaling from the base station or through preconfiguration. The subset of the resource pool may be associated with one or more PSCCH resources, or associated with one or more PSCCH patterns.

In this application, the PSCCH and a scheduled PSSCH may be sent in a same subframe, or the PSCCH is always sent before a scheduled PSSCH. The former is referred to as a transmission manner 1 in this application, and the latter is referred to as a transmission manner 2. When a subset of a PSCCH resource pool is configured or preconfigured, the UE may determine a transmission manner and select a location of a PSCCH resource based on a service type. For example, if data sent by the UE belongs to a first service type, the UE uses the transmission manner 1, and the UE selects a PSCCH resource from the subset of the PSCCH resource pool. If data sent by the UE belongs to a second service type, the UE uses the transmission manner 2, and selects a PSCCH resource from the PSCCH resource pool. The first service type and the second service type are defined by a standard.

In this embodiment, the terminal may configure M resource pools based on the obtained sidelink configuration information. At least one parameter of the M resource pools is the same, and the at least one parameter is determined based on a first parameter.

Specifically, the terminal may determine an SL BWP based on the foregoing BWP determining manner. In a process of configuring resource pools in the SL BWP, the terminal obtains a common first parameter of the resource pools, and may determine a related parameter (namely, the at least one parameter) of the M resource pools based on the first parameter. In other words, the at least one parameter of the M resource pools is the same.

Frequency domain resources in any two of the M resource pools may completely overlap, may not overlap, or may partially overlap. This embodiment of this application is not limited thereto. It should be noted that, when the frequency domain resources in any two of the M resource pools overlap (completely overlap or partially overlap), different frame structures (for example, subcarrier spacings or CPs) may be configured for the resource pools whose frequency domain resources overlap, so that the resource pools whose frequency domain resources overlap transmit different data.

The following describes a relationship between the first parameter and the at least one parameter.

In a case, the first parameter may be a common parameter of the M resource pools that the terminal uses in an actual communication process. In this case, the terminal may determine a first parameter in SL BWP configuration information as the related parameter (namely, the at least one parameter) of the M resource pools, so that the at least one parameter of the M resource pools is the same. It should be understood that, in this case, the at least one parameter is the first parameter. It may also be understood that, the first parameter is a BWP-level parameter and is applicable to all resource pools in an SL BWP, and all the resource pools in the SL BWP have a same parameter feature.

In another case, the first parameter may be a common parameter pre-configured for the M resource pools. In other words, the first parameter may be a common parameter that a network device or a system expects all the M resource pools to use. Therefore, the terminal may use the first parameter when configuring the M resource pools. For example, the first parameter may include a plurality of parameter values. However, when each resource pool is actually configured, at least one parameter value may be selected from the first parameter to configure the resource pool, and at least one parameter determined from the first parameter is a parameter applicable to all the M resource pools. In this way, the at least one parameter of the M resource pools is the same. In this case, the at least one parameter is equal to one or more values of the first parameter. Optionally, the first parameter includes at least one of the following: a waveform, an uplink/downlink configuration of a frame structure, or a parameter set, and the parameter set includes a subcarrier spacing and/or a cyclic prefix CP.

The waveform indicates whether a single carrier or multiple carriers are used for data transmission, for example, whether cyclic prefix-orthogonal frequency division multiplexing access (cyclic prefix-orthogonal frequency division multiplexing access, CP-OFDMA) or discrete fourier transform-spread-orthogonal frequency division multiplexing access (discrete fourier transform-spread-OFDMA, DFT-S-OFDMA) is used.

The uplink/downlink configuration of the frame structure indicates a resource used for uplink transmission, a resource used for downlink transmission, and a reserved resource in the SL BWP. Alternatively, at least one of a resource used for uplink transmission, a resource used for downlink transmission, and a reserved resource in the SL BWP may be determined based on the uplink/downlink configuration of the frame structure. It should be understood that, herein, the reserved resource may be a resource including the foregoing one or more flexible symbols, the resource used for uplink transmission may be a resource including the foregoing one or more uplink symbols, and the resource used for downlink transmission may be a resource including the foregoing one or more downlink symbols. Optionally, the resource used for downlink transmission cannot be used in SL communication, or the resource used for uplink transmission and/or the reserved resource may be used in SL communication. The parameter set may be understood as the foregoing frame structure parameter, and is a set of parameters indicating the frame structure. The parameter set may include at least one of the subcarrier spacing and the CP, or may include a parameter indicating a quantity of symbols included in a subframe or a slot. This is not limited herein.

It should be noted that "at least one" in embodiments of this application indicates "one or more", and the two descriptions are interchangeable.

By way of example, and not limitation, the first parameter may further include one or more of the following parameters:
a parameter adjacency PSCCH-PSSCH indicating whether a physical sidelink control channel (physical sidelink control channel, PSCCH) and a physical sidelink shared channel (physical sidelink shared channel, PSSCH) included in a resource pool are always adjacent to each other, which means that PSCCHs and PSSCHs of all the resource pools in the SL BWP may always be adjacent to each other, or may always not be adjacent to each other;
a parameter sync Config Index indicating synchronization configuration, which means that all the resource pools in the SL BWP may have a same synchronization configuration parameter;
a parameter SL-Sync Allowed indicating an allowed synchronization type, which means that all the resource pools in the SL BWP may have a same parameter indicating an allowed synchronization type, where the synchronization type may be a synchronization type such as satellite synchronization, base station synchronization, or terminal device synchronization; and
a zone identifier Zone ID indicating a zone, which means that all the resource pools in the SL BWP may correspond to a same zone identifier, where the zone may be a zone obtained through division based on a geographical position, and specific zone division may be predefined or may be configured by the network device for the terminal. The zone identifier is used to identify a zone. It should be understood that the foregoing descriptions are merely examples of the first parameter. This embodiment of this application is not limited thereto. A common parameter used to configure all the resource pools in the SL BWP may belong to the first parameter. This should not constitute a limitation on this embodiment of this application.

Further, the base station may also indicate, to the UE, a QoS flow identifier that cannot be supported. For example, for QoS profiles of a part of sidelink QoS flows, even a QoS profile with a lowest requirement cannot be met in a current base station or cell, and the base station may indicate that the QoS flows are not supported. In other words, that the QoS flows are not supported may also be understood as that the base station rejects the QoS flows.

In this scenario, the method may further include: After receiving the indication information from the base station, the UE indicates to the upper layer, the QoS profile selected by the base station. Details are as follows.

First, the core network sends, to the UE through the base station, indication information that carries the mapping rule. QoS mapping belongs to a function of an upper layer of the access stratum (access stratum, AS) of the UE. Specifically, after obtaining the mapping rule, the PC5-S layer of the UE may map a plurality of QoS profiles based on the mapping rule, and send the plurality of QoS profiles, a corresponding QoS flow identifier, and a corresponding destination identifier to the AS layer of the UE.

Subsequently, the AS layer sends, to the base station, the plurality of sets of QoS profiles, the corresponding QoS flow identifier, and the corresponding destination identifier that are obtained from the PC5 -S layer. The base station selects an appropriate QoS profile from the plurality of sets of QoS profiles or determines a QoS profile by itself, and sends indication information of the QoS profile and the corresponding QoS flow identifier to the AS layer. Optionally, the base station may further send, to the AS layer, the destination identifier corresponding to the QoS profile.

Next, after receiving the indication from the base station, the AS layer of the UE needs to further indicate the PC5-S layer, and notify the V2X layer of a specific QoS profile that should be followed or applied. Specifically, the AS layer sends the obtained QoS profile to the PC5-S layer, so that the PC5-S layer adapts the QoS profile and performs sidelink communication with a peer terminal. Further, the AS layer may further send, to the PC5-S layer, the QoS flow identifier corresponding to the QoS profile and the corresponding destination identifier. Optionally, the AS layer may further indicate, to the PC5-S layer, a QoS flow that is not supported or is rejected. Further, the base station may also update a selected QoS profile, and indicate the QoS profile to the UE. Correspondingly, the AS layer of the UE also needs to indicate update information to the PC5-S layer.

It may be understood that an AS layer destination identifier allocated by the PC5-S layer of the UE to a unicast connection of the UE is used for interaction with a peer UE, and an AS layer destination identifier of the peer UE is used as an identifier for data communication. Specifically, an upper layer of UE 1 allocates an AS layer identifier to the UE 1, and the UE 1 uses the AS layer identifier as a source identifier. After the AS layer identifier is sent to a peer UE, that is, UE 2, the UE 2 uses the AS layer identifier as a destination identifier.

In this implementation, for UE in a connected state, the UE can adapt to an optimal QoS profile through participation of the base station, thereby improving network communication efficiency.

### 2. Implementation 2 in the regular sidelink scenario

It is different from Implementation 1 that, in this embodiment, the UE may select an appropriate set of QoS profile by itself.

Optionally, in this scenario, the method may further include the following steps.

The communication device receives sidelink configuration information sent by the network device.

The communication device selects one of the plurality of quality of service profiles based on the sidelink configuration information.

In this manner, the UE receives sidelink configuration sent by the base station. The sidelink configuration may be sent by the base station to the UE through broadcast or RRC dedicated signaling. For example, when the UE is in an idle state or an inactive state, the base station sends the sidelink configuration to the UE by using a broadcast message. When the UE is in a connected state, the base station sends the sidelink configuration to the UE through the RRC dedicated signaling.

Optionally, the sidelink configuration information includes a correspondence between a sidelink measurement result and QoS. Specifically, the sidelink measurement result may include at least one or more of a channel busy ratio (Channel Busy Ratio, CBR), reference signal received power (reference signaling received power, RSRP), reference signal received quality (reference signaling received quality, RSRQ), and channel state information (channel state information, CSI). The CBR is used as an example. The sidelink configuration information includes a CBR value and a QoS profile corresponding to the CBR value, to indicate QoS that can be supported in a corresponding CBR scope. The UE uses the sidelink configuration information to determine, from the plurality of sets of QoS profiles, a QoS profile that best conforms to a current network environment. The foregoing CBR may be used to evaluate channel load or channel quality at a current moment.

The UE may determine a set of QoS profile from the plurality of sets of QoS profiles based on the sidelink configuration, and determine a sidelink bearer configuration based on the selected set of QoS profile. Specifically, the UE obtains a CBR of a current resource pool through measurement, and then determines a corresponding QoS profile based on the sidelink configuration. The QoS profile may be understood as QoS that can be met or guaranteed currently. Subsequently, the UE selects a set of QoS profile from the obtained plurality of sets of QoS profiles. The QoS profile may be a QoS profile that can meet a highest QoS requirement in a QoS range that can be met currently, or a QoS profile that best conforms to a current network communication environment.

Optionally, when the UE is in the idle state or the inactive state, the sidelink bearer configuration may be further determined based on the selected QoS profile. Specifically, the UE may obtain a mapping relationship between a QoS profile and a sidelink bearer as well as the sidelink bearer configuration from the broadcast of the base station.

In this embodiment, the method may further include the following step.

The communication device sends the selected quality of service profile to the network device.

Specifically, after determining the QoS profile, the UE may notify the base station of the QoS profile, for example, report the QoS profile to the base station by including the QoS profile in sidelink UE information (Sidelink UE Information, SUI). If the UE is in the connected state, the UE reports the QoS profile to the base station after selecting the QoS profile. In other words, when the UE is in the idle state or the inactive state, the UE does not need to send the selected QoS profile to the base station.

Optionally, the UE may report a QoS flow identifier, a QoS profile mapped from a QoS flow and a destination identifier (destination ID, DST ID) to the base station by using the sidelink UE information (Sidelink UE Information, SUI). The SUI is used to request to perform resource configuration. In this solution, the AS layer of the UE may select an appropriate set of QoS profile from the plurality of sets of QoS profiles, and send the selected QoS profile, a corresponding QoS flow identifier, and a corresponding destination identifier to the PC5-S layer, so that the PC5-S layer performs adaptation based on obtained information and performs sidelink communication with a peer UE. For a specific interaction manner, refer to the Implementation 1.

Further, if the CBR result measured by the UE changes, the UE also needs to update a selection result. The UE determines, based on a latest CBR obtained through measurement, QoS that can be currently met, and further determines whether the selection result needs to be updated. If the QoS is updated, updating a sidelink bearer configuration needs to be performed accordingly. Specifically, the updating a sidelink bearer configuration may be deleting a previously established sidelink bearer, determining a sidelink bearer configuration based on the updated QoS, and establishing a new sidelink bearer based on the sidelink bearer configuration. Alternatively, the UE reports an updated QoS profile to the base station. Optionally, the AS layer indicates update information to the PC5-S layer, so that the PC5-S layer can perform a subsequent operation based on the update information.

In this implementation, the base station provides the correspondence between a sidelink measurement result and QoS. In combination with the sidelink measurement result obtained by the UE through measurement, the UE comprehensively determines QoS that can be met in a current environment, to more accurately select a QoS profile, thereby improving communication efficiency between terminals.

### 3. Implementation in the sidelink CU-DU scenario

A difference from the Implementation 1 in the regular sidelink scenario lies in that the DU selects one set of QoS profile from a plurality of sets of QoS profiles for communication between UEs.

In this scenario, the method may further include the following step.

The CU sends, to the DU, an identifier of a sidelink QoS flow and a plurality of sets of QoS profiles corresponding to the sidelink QoS flow.

Specifically, the CU receives a plurality of sets of QoS profiles, a corresponding QoS flow identifier, and a corresponding destination identifier that are obtained from the PC5-S layer and that are sent by the AS layer of the UE. The DU selects an appropriate QoS profile from the plurality of sets of QoS profiles or generates a QoS profile by itself, and indicates the QoS profile and the corresponding QoS flow identifier to the CU, so that the CU indicates the foregoing information to the UE. Optionally, that the DU indicates the QoS profile to the CU may be understood as that the DU sends indication information of the QoS profile to the CU. Further, the DU may send, to the CU, the destination identifier corresponding to the QoS profile.

Next, the CU sends the foregoing indication to the AS layer of the UE, and then the AS of the UE needs to further indicate the PC5-S layer and notify the PC5-S layer of a specific QoS profile that should be followed or applied. Specifically, the AS sends the obtained QoS profile, the corresponding QoS flow identifier, and the corresponding destination identifier to the PC5-S layer, so that the PC5-S layer adapts the QoS profile and performs sidelink communication with a peer terminal. Optionally, the AS layer may further indicate, to the PC5-S layer, a QoS flow that is not supported or rejected. Further, the base station may also update a selected QoS profile, and indicate the QoS profile to the UE. Correspondingly, the AS layer of the UE also needs to indicate update information to the PC5 -S layer.

In this embodiment, the plurality of sets of QoS profiles that correspond to the sidelink QoS flow and that are sent by the CU to the DU may be the same as or different from the plurality of sets of QoS profiles received by the CU from the UE. The difference may be understood as that quantities of the plurality of sets of QoS profiles are different, or arrangement sequences of the plurality of sets of QoS profiles are different, or QoS parameter values in the plurality of sets of QoS profiles are different, or the like. In other words, provided that any parameter in the plurality of sets of QoS profiles is different, regardless of whether specific content or a quantity of the parameter is different, it may be considered that the plurality of sets of QoS profiles that correspond to the sidelink QoS flow and that are sent by the CU to the DU are different from the plurality of sets of QoS profiles received by the CU from the UE.

Optionally, the DU sends, to the CU, information about the sidelink QoS flow and information indicating a QoS profile corresponding to the QoS flow. Specifically, the DU selects one set of QoS profile from the plurality of sets of QoS profiles obtained from the CU, and sends the set of QoS profile to the CU. For example, the set of QoS profile indicated by the DU to the CU may be carried in profile indication information, and the indication information indicates the QoS profile selected by the DU. The indication information may be an index or an identifier, or may be a complete set of QoS profile, provided that the CU can learn of or locate the QoS profile selected by the DU. This is not limited in the present invention.

In this embodiment, after receiving the information about the sidelink QoS flow and the information indicating the QoS profile corresponding to the QoS flow, the CU may directly pack the information into an RRC message without parsing, or may parse the information, generate indication information for the UE, and send the indication information to the UE. It may be understood that the indication information fed back by the DU to the CU and the indication information sent by the CU to the UE may be the same or different, but indicate a same QoS profile. For example, a value range of QoS profiles in the indication information fed back by the DU to the CU may be different from a value range of QoS profiles in the indication information sent by the CU to the UE.

Optionally, the CU sends, to the UE, the information about the sidelink QoS flow and the information indicating the selected QoS profile corresponding to the sidelink QoS flow. The information indicating the QoS profile indicates, to the UE, the QoS profile selected for the sidelink QoS flow.

Optionally, if the foregoing information needs to be adjusted with a network environment, an update is initiated by the DU, and update information is sent to the CU. After obtaining the update information, the CU also needs to send the update information to the UE.

In this implementation, because the DU knows a current sidelink resource usage status, the DU selects one of the plurality of sets of QoS profiles to optimize network communication efficiency, thereby better adapting to a current communication environment.

FIG. 4 is a schematic diagram of a hardware structure of a communication apparatus 40 according to an embodiment of this application. The communication apparatus 40 includes at least one processor 401, a communication bus 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication bus 402 may include a channel, to transfer information between the foregoing components. The communication interface 404 uses any transceiver-type apparatus, and is configured to communicate with another device or a communication network such as the Ethernet, a radio access network (radio access network, RAN), or a wireless local area network (wireless local area network, WLAN).

The memory 403 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed to a computer. However, the memory 403 is not limited thereto. The memory may exist independently, and is connected to the processor through the bus. The memory may alternatively be integrated with the processor.

The memory 403 is configured to store and execute application program code in solutions of this application, and the processor 401 controls execution. The processor 401 is configured to execute the application program code stored in the memory 403, to implement the communication method provided in the foregoing embodiment of this application. Alternatively, optionally, in this embodiment of this application, the processor 401 may perform processing related functions in the communication method provided in the foregoing embodiment of this application, and the communication interface 404 is responsible for communication with another device or a network. This is not specifically limited in this embodiment of this application.

During specific implementation, in an embodiment, the processor 401 may include one or more CPUs, for example, a CPU 0 and a CPU 1 in FIG. 4.

During specific implementation, in an embodiment, the communication apparatus 40 may include a plurality of processors, for example, the processor 401 and a processor 408 in FIG. 4. Each of the processors may be a single-core (single-CPU) processor, or may be a multi-core (multi-CPU) processor. The processor herein may be one or more devices, circuits, and/or processing cores configured to process data (for example, computer program instructions). It may be understood that FIG. 4 shows only a simplified design of the communication apparatus 40. During actual application, the communication apparatus may include any quantity of input devices, output devices, processors, memories, and communication interfaces, and the foregoing functions may be provided by any quantity of communication units separately or in a manner of a combination.

During specific implementation, in an embodiment, the communication apparatus 40 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, a projector (projector), or the like. The input device 406 communicates with the processor 401 and may receive a user input in a plurality of manners. For example, the input device 406 may be a mouse, a keyboard, a touchscreen device, a sensor device, or the like.

In addition, as described above, the communication apparatus 40 provided in this embodiment of this application may be a chip, a terminal, a base station, a CU or a DU, or a device with a similar structure as that in FIG. 4. A type of the communication apparatus 40 is not limited in this embodiment of this application.

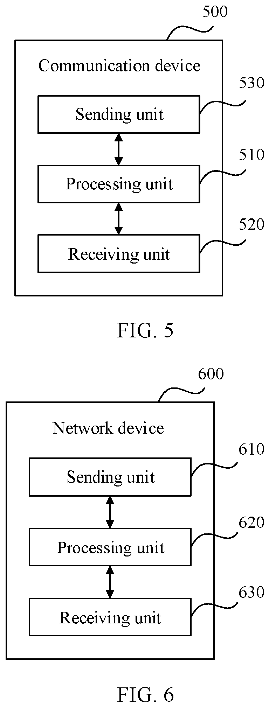

FIG. 5 is a schematic diagram of a structure of a communication device according to an embodiment of this application. The communication device may be a terminal, an apparatus having a terminal function, a chip, or the like in the embodiments. Meanings or functions of the following terms or nouns may be understood with reference to the foregoing description, and details or implementations of the following steps or actions may also be understood with reference to the foregoing description. As shown in FIG. 5, a communication device 500 may include a processing unit 510 and a sending unit 530. Further, the communication device further includes a receiving unit 520. The receiving unit 520 may be connected to the sending unit 530 through an antenna.

The sending unit 530 and the receiving unit 520 may be configured to support information receiving and sending between the communication device and a network device. Alternatively, the sending unit 530 and the receiving unit 520 may be configured to perform processing performed by the communication device in the communication method described in the foregoing embodiment.

For example, the processing unit 510 is configured to map a plurality of quality of service profiles for a quality of service flow. The sending unit 530 is configured to send at least one of the plurality of quality of service profiles to a network device.

Optionally, that the sending unit 530 is configured to send at least one of the plurality of quality of service profiles to a network device specifically includes:
sending the plurality of quality of service profiles, an identifier of the quality of service flow, and a destination identifier to the network device.

Optionally, the receiving unit 520 is further configured to receive indication information from the network device, to indicate one of the plurality of quality of service profiles.

Optionally, the receiving unit 520 is further configured to receive sidelink configuration information sent by the network device; and the processing unit 510 is further configured to select one of the plurality of quality of service profiles based on the sidelink configuration information.

Optionally, that the sending unit 530 is configured to send at least one of the plurality of quality of service profiles to a network device specifically includes:
sending the selected quality of service profile to the network device.

Optionally, the sidelink configuration information includes communication range information corresponding to a channel busy ratio.

Optionally, the receiving unit 520 is further configured to obtain a mapping rule of quality of service. That the processing unit 510 maps the plurality of quality of service profiles for quality of service flow information specifically includes the following step.

The communication device maps the plurality of quality of service flow profiles for the quality of service flow information based on the mapping rule.

FIG. 6 is a schematic diagram of a structure of a network device according to an embodiment of this application. The network device may be a base station, an apparatus having a base station function, a chip, or the like in the embodiments. Meanings or functions of the following terms or nouns may be understood with reference to the foregoing description, and details or implementations of the following steps or actions may also be understood with reference to the foregoing description. As shown in FIG. 6, a network device 600 may include a processing unit 620. Further, a sending unit 610 and a receiving unit 630 may be included. The sending unit 610 and the receiving unit 630 may separately be connected to an antenna.

The sending unit 610 and the receiving unit 630 may be configured to support information receiving and sending between the network device and a terminal device. Alternatively, the sending unit 610 and the receiving unit 630 may be configured to perform processing performed by the network device in the communication method described in the foregoing embodiment.

For example, the processing unit 620 is configured to obtain a quality of service profile based on a plurality of quality of service profiles, where the plurality of quality of service profiles are mapped to a quality of service flow.

For another example, the processing unit 620 obtains at least one of a plurality of quality of service profiles, where the plurality of quality of service profiles are mapped to a quality of service flow.

Optionally, the receiving unit 630 is configured to receive the plurality of quality of service profiles, an identifier of the quality of service flow, and a destination identifier from UE.

Optionally, the sending unit 610 is configured to send indication information to the UE to indicate one of the plurality of quality of service profiles.

Optionally, the sending unit 610 is configured to send sidelink configuration information to the UE, so that the UE selects one of the plurality of quality of service profiles based on the sidelink configuration information.

Optionally, the receiving unit 630 is configured to receive, from the UE, the quality of service profile selected from the plurality of quality of service profiles.

Optionally, the sidelink configuration information includes communication range information corresponding to a channel busy ratio.

In this embodiment, the communication device or the network device is presented in a form of function modules or units obtained through division in an integrated manner. The "module" or "unit" herein may be an application-specific integrated circuit (Application-Specific Integrated Circuit, ASIC), a circuit, a processor and a memory that execute one or more software programs or firmware programs, an integrated logic circuit, and/or another component that can provide the foregoing function. In a simple embodiment, a person skilled in the art may consider that the apparatus 500 or 600 may separately use the form shown in FIG. 4. For example, a function/an implementation process of the sending unit 530/receiving unit 520 in FIG. 5 may be implemented by the processor 401 and the memory 403 in FIG. 4. Specifically, the application program code stored in the memory 403 may be invoked by the processor 401. This is not limited in embodiments of this application. Alternatively, optionally, a function/an implementation process of the sending unit 530/receiving unit 520 in FIG. 5 may be implemented by the processor 401 in FIG. 4, or may be implemented by the communication interface 404 in FIG. 4. This is not limited in embodiments of this application. For another example, a function/an implementation process of the sending unit 610/receiving unit 630 in FIG. 6 may be implemented by the processor 401 and the memory 403 in FIG. 4. Specifically, the application program code stored in the memory 403 may be invoked by the processor 401. This is not limited in embodiments of this application. Alternatively, optionally, a function/an implementation process of the sending unit 610/receiving unit 630 in FIG. 6 may be implemented by the processor 401 in FIG. 4, or may be implemented by the communication interface 404 in FIG. 4. This is not limited in embodiments of this application.

Optionally, an embodiment of this application provides a chip system. The chip system includes a processor, configured to support a communication device in implementing the foregoing communication method. In a possible design, the chip system further includes a memory. The memory is configured to store program instructions and data that are necessary for the communication device. The chip system may include a chip, or may include a chip and another discrete device. This is not specifically limited in this embodiment of this application.

The controller/processor configured to perform the base station, terminal, base station or terminal in the present invention may be a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The controller/processor may implement or execute various example logical blocks, modules, and circuits described with reference to content disclosed in the present invention. The processor may be a combination for implementing a computing function, for example, a combination of one or more microprocessors, or a combination of the DSP and a microprocessor. Methods or algorithm steps described in combination with the content disclosed in the present invention may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a terminal or a base station. Certainly, the processor and the storage medium may exist in a terminal or a base station as discrete components.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

In the foregoing embodiments of the present invention, the communication method provided in embodiments of the present invention is described from perspectives of each network element and interaction between network elements. It may be understood that to implement the foregoing functions, each network element, such as the terminal or the communication apparatus, includes corresponding hardware structures and/or software modules for executing the functions. A person skilled in the art should easily be aware that, in combination with the example units and algorithm steps described in the embodiments disclosed in this specification, the present invention may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the present invention. The objectives, technical solutions, and benefits of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made based on the technical solutions of the present invention shall fall within the protection scope of the present invention.

## Claims

1. A communication method used between terminals, comprising:
mapping, by a communication device, a plurality of quality of service profiles for a quality of service flow; and
sending, by the communication device, at least one of the plurality of quality of service profiles to a network device.

2. The method according to claim 1, wherein the sending, by the communication device, at least one of the plurality of quality of service profiles to a network device specifically comprises:
sending, by the communication device, the plurality of quality of service profiles, an identifier of the quality of service flow, and a destination identifier to the network device.

3. The method according to claim 2, further comprising:
receiving, by the communication device, indication information from the network device, to indicate one of the plurality of quality of service profiles.

4. The method according to claim 1, wherein the method further comprises:
receiving, by the communication device, sidelink configuration information sent by the network device; and
selecting, by the communication device, one of the plurality of quality of service profiles based on the sidelink configuration information.

5. The method according to claim 4, wherein
the sending, by the communication device, at least one of the plurality of quality of service profiles to a network device specifically comprises:
sending, by the communication device, the selected quality of service profile to the network device.

6. The method according to claim 4 or 5, wherein
the sidelink configuration information comprises at least one or more of a channel busy ratio, a reference signal received power, reference signal received quality, and channel state information.

7. The method according to any one of claims 1 to 6, wherein
the method further comprises:
obtaining, by the communication device, a mapping rule of quality of service; and
the mapping, by a communication device, a plurality of quality of service profiles for a quality of service flow specifically comprises:
mapping, by the communication device, the plurality of quality of service flow profiles for the quality of service flow based on the mapping rule.

8. A communication method used between terminals, comprising:
obtaining, by a network device, at least one quality of service profile based on a plurality of quality of service profiles, wherein the plurality of quality of service profiles correspond to a quality of service flow.

9. The method according to claim 8, further comprising:
receiving, by the network device, the plurality of quality of service profiles, an identifier of the quality of service flow, and a destination identifier from a communication device.

10. The method according to claim 9, further comprising:
sending, by the network device, indication information to the communication device, to indicate one quality of service profile obtained based on the plurality of quality of service profiles.

11. The method according to claim 8, wherein the method further comprises:
sending, by the network device, sidelink configuration information to the communication device.

12. The method according to claim 11, wherein
the obtaining, by a network device, at least one quality of service profile based on a plurality of quality of service profiles specifically comprises:
receiving, by the network device, one quality of service profile that is selected based on the sidelink configuration information from the plurality of quality of service profiles and that is sent by the communication device.

13. The method according to claim 11 or 12, wherein
the sidelink configuration information comprises at least one or more of a channel busy ratio, a reference signal received power, reference signal received quality, and channel state information.

14. An apparatus, configured to perform the method according to any one of claims 1 to 13.

15. An apparatus, wherein the apparatus comprises a processor, a memory, and instructions that are stored in the memory and that can be run on the processor; and when the instructions are run, the apparatus is enabled to perform the method according to any one of claims 1 to 7.

16. An apparatus, wherein the apparatus comprises a processor, a memory, and instructions that are stored in the memory and that can be run on the processor; and when the instructions are run, the apparatus is enabled to perform the method according to any one of claims 8 to 13.

17. A terminal, comprising the apparatus according to claim 15.

18. Abase station, comprising the apparatus according to claim 16.

19. A communication system, comprising the terminal according to claim 17 and the base station according to claim 18.

20. A computer-readable storage medium, comprising instructions, wherein when the instructions are run on a computer, the computer is enabled to perform the method according to any one of claims 1 to 13.

21. A computer program product, wherein when the computer program product runs on a computer, the computer is enabled to perform the method according to any one of claims 1 to 13.
